# EUROPEAN PATENT APPLICATION

(11) **EP 2 871 399 A1**
(43) Date of publication of application: **13.05.2015**
(21) Application number: 13192371.6
(22) Date of filing: 11.11.2013
(51) Int. Cl.: F16L 55/05, B01F 3/00, G05D 7/06

(54) **Closed loop fluid buffer for a bi-component mixing system mounted for movement with a dispenser**

(71) Applicant: Nordson Corporation, Westlake, Ohio 44145-1119 (US)
(72) Inventor: Loehr, Bernard, 2000 Neuchatel (CH); Franken, Ronny, 3630 Maasmechelen (BE); Orla-Jensen, Orla-Jensen Per, 6226BD Maastricht (NL); Padgett, David Noble, Carlsbad, CA California 92010 (US)
(74) Representative: Eisenführ Speiser

(57) **Abstract**

The invention relates to a closed loop fluid buffer (1, 136) for stabilizing an output pressure of a fluid supply system, in particular a bi-component mixing system (100). In particular, it is suggested that the buffer comprises a fluid cavity (10) having a fluid cavity volume and a fluid cavity wall, said fluid cavity (10) having an inlet (12, 138) and an outlet (14, 140), wherein said inlet (12, 138) is adapted to be in fluid communication with at least one fluid reservoir (118, 122) and said outlet (14, 140) is adapted to be in fluid communication with a dispensing applicator (102), wherein said fluid cavity wall comprises at least one flexible buffering portion (18) to allow a volume change of the fluid cavity volume. The invention further relates to systems having such a buffer such as a bi-component mixing system (100) comprising a closed loop fluid buffer (186) and bi-component mixing system (100) mounted on an x-y-mover (500) for movement with a dispenser, and to a method of dispensing a fluid.

## Description

The invention relates to a closed loop fluid buffer for stabilizing an output pressure of a fluid supply system, in particular a bi-component mixing system. The invention further relates to a bi-component mixing system for use with a dispenser, a dispensing system comprising a bi-component mixing system, a bi-component mixing system mounted for movement with a dispenser and a method for dispensing a fluid.

Fluid supply systems, in particular bi-component mixing systems are widely used in industrial applications to dispense a fluid for example an adhesive on a substrate. Such substrates can include but are not limited to paper, cardboards, non-woven materials, electrical components and the like. In these applications it is often crucial to dispense a predetermined amount of fluid in an accurate way.

The objective of the invention is to provide a closed loop fluid buffer, a bi-component mixing system, a dispensing system and a method of the aforementioned types which are able to supply an improved fluid flow, in particular a stabilized fluid flow with stabilized output pressure and a bi-component mixing system mounted for movement with a dispenser.

According to a first aspect of the invention a closed loop fluid buffer for stabilizing an output pressure of a fluid supply system, in particular a bi-component mixing system is provided, comprising a fluid cavity having a fluid cavity volume and a fluid cavity wall, said fluid cavity having an inlet and an outlet, wherein said inlet is adapted to be in fluid communication with at least one fluid reservoir and said outlet is adapted to be in fluid communication with a dispensing applicator, wherein said fluid cavity wall comprises at least one flexible buffering portion to allow a volume change of the fluid cavity volume. Preferably the volume change of the fluid cavity volume acts to compensate fluctuations in an input pressure and/or flow through the buffer cavity. Further, the volume change of the fluid cavity volume acts preferably to provide a substantially constant output pressure at or immediately downstream of the outlet of the buffer cavity. The closed loop fluid buffer preferably is adapted to keep the output pressure constant, virtually independent of the flow.

In normal operation, the inlet and outlet flows to and from the fluid cavity should be equal. Also the pressure at the inlet and the outlet should be constant, aside from a normal pressure drop over the flow length of the fluid buffer cavity. However it may happen that fluctuations in an input flow to the fluid cavity occur for example due to an upstream mixing process of a two-component system. Further, also fluctuations in a consumption of a downstream dispensing applicator may occur based on variations in an application pattern. When for example an input flow at the inlet into the fluid cavity is higher than an output flow out of the outlet of the fluid cavity the flexible buffering portion allows the fluid cavity volume to increase accordingly. In the contrary case, where a fluid flow at the inlet into the fluid cavity is lower than an output flow out of the outlet of the fluid cavity, the flexible buffering portion allows the fluid cavity volume to decrease accordingly. This leads to an improved and stabilized output pressure and to a better dispensing and application quality.

The term bi-component is used herein to refer to plural component materials which are formed from two or more complements that are mixed together and when mixed are normally reactive to form a quick setting adhesive material or other type material. Thus, as described below, two pumps, each connected to a syringe of material to profits will be used to supply the two materials to a mixer which mixes the two materials together. If material were a three component material, for example, then three pumps would be used, with each connected to a syringe, or other source of the supply for the component material.

According to a first preferred embodiment the closed loop fluid buffer further comprises a rigid housing, said housing partially forming said fluid cavity wall, wherein said housing comprises a recess which cooperates with said flexible buffering portion such that said flexible buffering portion can expand into said recess in order to provide said volume change of the fluid cavity volume. Thus, the flexible buffering portion of the fluid cavity wall is arranged concurrent with the recess in the rigid housing, so that the recess provides a space allowing the flexible buffering portion to expand into this space. Therefore, when the fluid flow at the inlet increases and thus a pressure inside the fluid cavity increases, the flexible buffering portion expands into the recess of the housing thus increasing the fluid cavity volume and at the same time balancing the pressure inside the fluid cavity, while preventing an upstream dispenser or a nozzle from experiencing an excess pressure or fluid flow, which could cause damage such as compromising seals in the dispenser, for example.

According to a further preferred embodiment said recess is sealed from said fluid cavity by means of said flexible buffering portion so that said recess and said flexible buffering portion define a working chamber inside the housing. Thus, all the supplied fluid may be kept inside the fluid cavity and cannot escape into the recess or into the working chamber.

According to a particular preferred embodiment the flexible buffering portion is formed by a flexible tube arranged in said housing and forming at least partially said fluid cavity wall. Preferably the flexible tube completely forms the fluid cavity wall. Preferably the flexible tube comprises an inlet and an outlet, said inlet and outlet of the flexible tube forming said inlet and outlet of the fluid cavity. Preferably, the flexible tube extends completely through said housing. This is a very simple arrangement wherein the flexible tube also may form a part of a fluid conduit system leading from a reservoir to a dispenser or the like. Alternatively, the flexible buffering portion is formed by a flexible membrane, said membrane being fixedly attached to said housing and covering said recess. Thus, according to this embodiment, the fluid cavity is defined by the rigid housing and the membrane. The membrane may be formed as a thin elastic layer, fixed along its circumferential edge to the edge of the recess

According to the above embodiment, it may further be provided that the flexible tube is fixedly attached to said housing, so that only the buffering portion may expand or contract to allow a volume change of the fluid cavity volume. Thus, the flexible tube may on its outer surface be fixedly attached to an inside surface of the rigid housing, only leaving a free portion concurrent with the recess in the housing, which forms the flexible buffering portion of the tube. Preferably the tube is fixed to the rigid housing, in particular by means of adhering the flexible tube to the housing. This provides that also when the fluid cavity volume decreases, only the flexible buffering portion of the tube may expand or contract in direction of the fluid cavity. Alternatively the tube may just be positioned in the housing, in particular in a tight manner, such as pressing. The tube is preferably positioned in the housing so that it can only expand in one direction, the recess.

In a further preferred embodiment of the closed loop fluid buffer the housing comprises a pressure inlet for supplying a pressurized fluid, in particular gas, into said working chamber. The pressure regulator preferably works to keep the pressure inside the working chamber substantially constant. Thus it can be ensured that the pressure at the outlet of the fluid buffer cavity can be kept substantially constant. Preferably the pressure regulator is adapted to supply a pressure to the working chamber which is substantially equal to the overall fluid pressure in the system, as e.g. the pressure the fluid is also pressurized with inside a reservoir or a syringe including the fluid.

Preferably the housing is at least partially transparent. The housing may be formed out of a transparent material such as a transparent polymer material. Further the housing may comprise a window or the like. Thus a person using the closed loop fluid buffer according to the invention is able to watch the fluid buffer working, i.e. expanding and contracting, and may determine if said buffer works correctly.

According to a further preferred embodiment the closed loop fluid buffer comprises a sensor for detecting a volume change of said fluid cavity volume. Such a sensor can be used to determine whether inside the cavity there is enough, too much or too less fluid and thus can be used to either increase or decrease a working speed of a supply pump supplying fluid to the cavity. Such a sensor can be formed as a proximity switch, a distance sensor, a pressure sensor or the like.

Particular preferred is that the sensor is adapted to measure a distance to said flexible buffer portion. Thus, the sensor is adapted to measure a distance between the sensor and/or a portion of the rigid housing to the flexible buffering portion. Since only the flexible buffering portion may expand or swell into the recess or into the direction of the fluid cavity, from a distance between the flexible buffering portion and a portion of the housing the volume of the fluid cavity can be determined and thus the amount of fluid inside the fluid cavity.

According to a preferred alternative said sensor comprises flow sensors arranged at the inlet and the outlet of said fluid buffer cavity. Instead of a flow sensor, a flow meter may be used. In the embodiment where a flow sensor, or flow meter, are positioned at the inlet and at the outlet of the fluid buffer, the difference value between these two sensors indicates the amount of fluid inside the fluid buffer. This difference value can be used for controlling the pumps and mixer, as will later be described.

In a second aspect of the invention, the above objective is solved by a bi-component mixing system for use with a dispenser, comprising a first pump for pumping a first component, said first pump having an inlet and an outlet, the inlet being in fluid communication with a reservoir of the first fluid component; a second pump for pumping a second component, said second pump having an inlet and an outlet, the inlet being in fluid communication with a reservoir of the second component; said outlets of said first and second pumps each being in fluid communication with a mixer for mixing said first and second components, and a closed loop fluid buffer in fluid communication with said mixer, wherein said closed loop fluid buffer is a fluid buffer according to one of the preceding described preferred embodiments of a closed loop fluid buffer.

According to a first preferred embodiment the bi-component mixing system the sensor provides a signal indicating a volume change of the cavity volume of the fluid buffer and the system further comprises a controller receiving the signal provided by said sensor and adapted to control said first and second pumps and/or said mixer based on said signal. Preferably the controller is adapted to control the first and second pumps and/or said mixer in order to keep a substantially constant fluid pressure at the outlet of said fluid buffer and therefore at an inlet of a dispensing applicator. The sensor is formed as described above with reference to a preferred embodiment of the closed loop fluid buffer.

Preferably said closed loop fluid buffer and said controller are adapted to define a flow request triggered fluid supply. The term "flow request triggered fluid supply" is herein understood to mean that the controller adjusts the pumps and/or the mixer based on the fluid request by a dispenser fed by the fluid buffer. For example, when starting the bi-component mixing system, the pumps are switched off after the fluid buffer cavity is filled with fluid to be supplied. At this timethe dispenser is idle. When the dispenser starts to dispense e.g. by opening a nozzle, fluid flows out of the dispenser and thus out of the fluid buffer cavity. The sensor detects the decrease in the volume of fluid inside the fluid buffer cavity and provides a signal to the controller indicating this decrease in volume. The controller upon receiving said signal turns on the motors of the pumps and the mixer to supply fluid to the fluid buffer cavity and thus to the dispenser. Such a system is triggered by the flow request from the fluid buffer caused by the dispensing of material from the dispenser so that the fluid buffer together with the sensor and the controller work as a closed loop feedback system. In the preferred embodiment, the mixer is a dynamic mixer having a motor which rotates mixing blades, or helical mixing elements. Generally, as the speed of the motors driving the pumps is increased, the speed of the motor driving the mixer will be correspondingly increased. In another embodiment, the mixer is a static mixer and the mixing blades or helical mixing elements are fixed in position and do not rotate. If a static mixer is used, then the controller would only operate the motors of the pumps to supply materials and would not have any control over the mixer.

According to these embodiments it is preferred that the controller is adapted to control said first and second pumps and/or said mixer so that, when said signal provided by said sensor indicates that the amount of fluid in the fluid cavity is below a predetermined lower threshold, the fluid flow from said mixer to said fluid buffer is increased; and when said signal provided by said sensor indicates that the amount of fluid in the fluid cavity is above a predetermined upper threshold, the fluid flow from said mixer to a said fluid buffer is decreased. Preferably the fluid flow to the fluid buffer is ultimately determined by a downstream dispenser. The bi-component mixing system only has to follow the requested fluid flow.

Additionally, the controller preferably is adapted to stop the fluid flow from said mixer to said fluid buffer, when the signal provided by the sensor indicates that the amount of fluid in the fluid cavity exceeds a second predetermined upper threshold which is higher than the first predetermined upper threshold. This leads to an improvement of the bi-component mixing system, since an excess fluid flow is prevented.. An excess fluid flow could occur, for example, if a tube or connection element would fail. Consequently, this function would prevent leakage or spilling of the liquid material being dispensed in that situation..

According a further preferred embodiment the fluid buffer is connectable or connected to a pressure regulator for supplying pressurized gas to the fluid buffer, in particular to the working chamber. The use of the pressurized gas is preferably adapted as described above with reference to the closed loop fluid buffer. The pressure regulator may preferably be part of a dispensing robot or the like. The pressure regulator preferably is also connected to a dispenser for use in such a system. Preferably the pressure regulator is connected to the reservoir of the first component and/or the reservoir of the second component. Thus, the pressure applied to the fluid in the system is constant throughout the active system. The controller may also adjust the pressure regulator. Alternately, the pressure regulator may be controlled by other control elements in the overall system.

As will be described in more detail below one particularly important embodiment of the invention is the use of the fluid buffer described herein with a jetting valve. In that the fluid buffer is intended to provide constant pressure at its output, and at the input to the jetting valve, it is particularly advantageous when used with a jetting valve because maintaining a constant pressure in the fluid supplied to the jetting valve helps to ensure that consistently sized droplets are jetted from the jetting valve onto the substrate.

According to a third aspect of the invention, the objective stated in the introductory portion is further solved by a dispensing system comprising a x-y-mover, a dispenser mounted on said x-y-mover, and a bi-component mixing system according to one of the preferred embodiments of a bi-component mixing system, described herein above, wherein at least some of the components of said bi-component mixing system is mounted on said x-y-mover and connected to said dispenser so that said dispenser and components of said said bi-component mixing system which are mounted on the x-y-mover are movable together as a unit by means of said x-y-mover.

In one preferred embodiment, only the mixer and fluid buffer are mounted for movement with the dispenser, and the controller, reservoirs, e.g. supply syringes and/or pumps are fixed in position. Preferably the dispenser comprises a jetting valve.

In a particularly preferred embodiment of the invention a bi-component mixing system is provided that can be mounted in close coupling to a jetting valve so that the bi-component mixing system and jetting valve can be moved together by an x-y mover over a substrate as the jetting valve dispenses droplets of two component materials, such as adhesives, onto the substrate for the attachment of electrical complements, for example, to the substrate by means of the adhesive.

For applying a fluid, in particular a two component or bi-component fluid on a substrate, the dispenser is moved along a predefined path to dispense a predefined pattern of fluid material, such as droplets of material, on the substrate. In that bi-component materials are generally reactive, meaning that the material will set up or harden very shortly after the components are mixed, it is important that the material be dispensed onto the substrate, or jetted out of the dispenser (for example through the jetting valve) onto the substrate, very quickly after it has been mixed. According to an aspect of this invention, by close coupling at least the mixer and fluid buffer parts of the bi-component mixing system to the dispenser, and moving them together over the substrate, the bi-component material can both be quickly dispensed after being mixed and can be provided to the dispenser, which is preferably a jetting valve, at a consistent pressure so that consistent droplets of the bi-component material can be jetted onto the substrate.

According to a fourth aspect of the invention, the objective stated in the introductory portion above is further solved by a method for dispensing fluid, in particular a bi-component fluid, comprising the steps: dispensing a specific amount of fluid from a dispenser; detecting a change of a fluid amount in a fluid buffer; providing a signal indicating said change of the fluid amount in the fluid buffer to a controller; controlling at least one pump and/or a fluid mixer based on said signal. Preferably the method is carried out by using a bi-component mixing system according to one of the preceding described preferred embodiments of a bi-component mixing system. Preferably the method is carried out by using a closed loop fluid buffer according to at least one of the preceding described preferred embodiments of a closed loop fluid buffer as the fluid buffer.

The method preferably further comprises the steps: controlling said at least one pump and/or said fluid mixer to supply an increased fluid flow when said signal indicates a decrease of the fluid amount in the fluid buffer; and controlling said at least one pump and/or said fluid mixer to supply a decreased fluid flow when said signal indicates an increase of the fluid amount in the fluid buffer. Preferably the steps above are carried out simultaneously and continuously. This method provides a flow request triggered closed loop system for supplying fluid from a reservoir to a dispenser. In the step "dispensing a specific amount of fluid from a dispenser", the dispenser places the flow request and the pumps and/or the mixer follow the request by means of the closed loop fluid buffer and the controller. The sensor of the closed loop fluid buffer recognizes when the dispenser starts to dispense, since at that point in time the amount of fluid in the fluid buffer cavity decreases and in answer to this decrease the controller starts the at least one pump and/or the mixer in order to supply fluid. When the dispenser stops dispensing fluid, the amount of fluid inside the fluid cavity increases, which again is detected by the sensor. In answer to this detection, the controller decreases the working speed of the at least one pump and/or the mixer or stops the at least one pump and/or the mixer so that the fluid cavity of the fluid buffer is again filled to a normal level and the output pressure of the fluid buffer may be substantially constant.

In the following the invention is described in more detail with reference to the accompanying drawings:
- Figure1: A cross-sectional view of a closed loop fluid buffer;
- Figure 2: a cross-sectional view of the closed loop fluid buffer of Figure 1, wherein the flexible buffering portion is expanded into the recess;
- Figure 3: a cross-sectional view of the closed loop fluid buffer of Figure 1 and 2, wherein the flexible buffering portion is swollen towards the fluid cavity;
- Figure 4: a schematic diagram of a bi-component mixing system wherein closed loop control is achieved using a sensor signal from the fluid buffer,
- Figure 4b: a schematic diagram of a bi-component mixing system wherein closed loop control is achieved by using flow sensors located before and after the fluid buffer,
- Figure 5: a schematic time sheet illustrating a working principle of the bi-component mixing system,
- Figure 6: the bi-component mixing system of Figure 4 mounted on an x-y-mover for movement with the dispenser,
- Figure 7a: a schematic side view of a flexible tube of the closed loop fluid buffer in engagement with a sensor, the flexible buffering portion in a first state, and
- Figure 7b: a schematic side view of the flexible tube of the closed loop fluid buffer in engagement with the sensor of figure 7a, the flexible buffering portion in a second state.

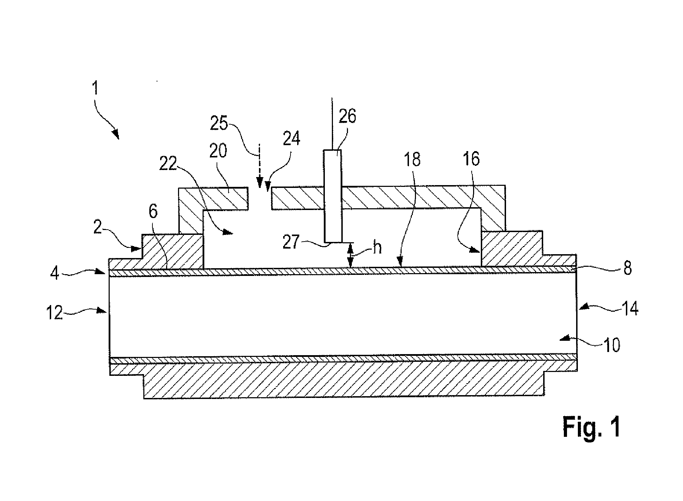

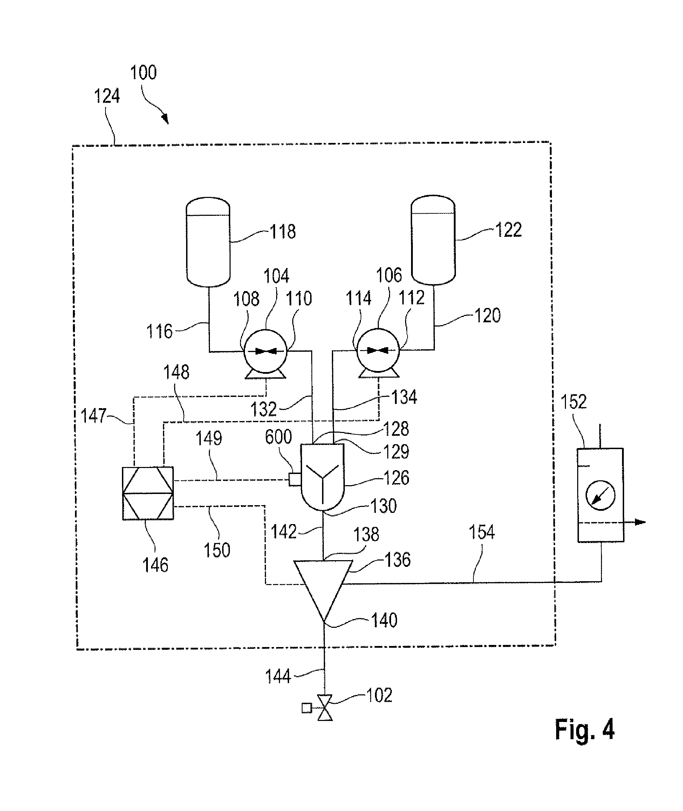

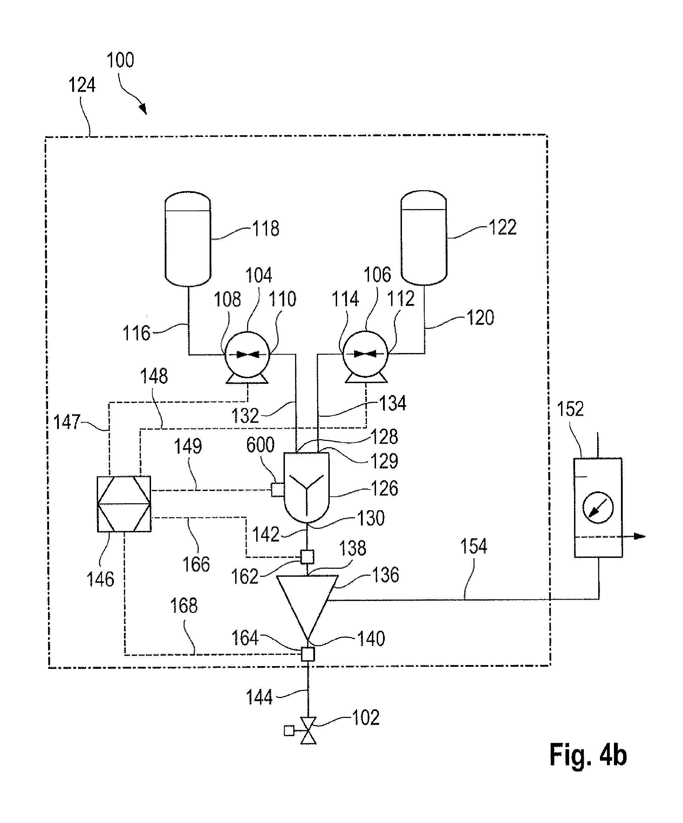

According to Figure 1 a closed loop fluid buffer 1 comprises a rigid housing which has a substantially cylindrical basic shape. It should be understood that in different embodiments the rigid housing may also have shapes different from cylindrical, for example rectangular, hexagonal, oval, conical, ball shaped etc. The housing 2 comprises a through bore 4 defining an inner surface 6 of the housing 2. A flexible tube 8 is arranged inside the through bore 4. The flexible tube 8 forms the fluid cavity wall of a fluid cavity 10. The fluid cavity 10 comprises an inlet 12 and an outlet 14. The flexible tube 8 extends from the inlet to the outlet, thus also forming the inlet 12 and the outlet 14. Fluid may flow from the inlet 12 to the outlet 14; the fluid buffer 1 thus may be arranged as a part of a fluid supply conduit for example connecting a mixer (not shown in figure 1, see figure 4) with a dispensing applicator.

The housing 2 further includes a recess 16 which is formed as an upper opening (seen with respect to figures 1 to 3) in the rigid housing 2. Since the housing 2 comprises the recess 16 a portion of the flexible tube 8 is not covered by the housing 2 and forms the flexible buffering portion 18 of the cavity wall. The recess 16 inside the housing 2 allows the flexible buffering portion 18 to expand into the recess 16 thus allowing a volume change of the fluid cavity volume. According to figure 1, the fluid buffer 1 is shown in a first normal state. The flexible buffering portion 18 is in a normal position and substantially relaxed. The fluid cavity volume according to this normal state is equivalent to the substantially cylindrical inner volume of the flexible tube 8 from the inlet 12 to the outlet 14.

As further shown in figure 1, the recess 16 is closed with an upper shell 20, which is fixed to the housing 2. The upper shell may also be formed integral with the housing 2. In an alternative embodiment the upper shell is formed out of a transparent material so that an operator may watch the flexible buffering portion 18 during operation of the closed loop fluid buffer 1. The housing further preferably comprises fixing means for mounting the fluid buffer 1 to a support bracket of a system (not shown in figures 1 to 3). Terms such as "upper" and "lower" in this specification refer to the respective orientation shown in the figures.

The flexible buffering portion 18 seals the recess 16 against the fluid cavity 10 and thus defines together with the housing and also the upper shell 20 a working chamber 22. The upper shell 20, which is part of the housing 2, comprises a pressure inlet 24 formed as a bore. As the arrow 25 indicates pressure can be supplied through the pressure inlet 24 into the working chamber 22. The pressure inlet 24 can be provided with a pressure inlet connector (not shown) so that a pressure regulator may be connected to the pressure inlet.

With further reference to figure 1, a sensor 26 is provided in the upper shell 20 and adapted to measure a distance h between a sensing portion 27 of the sensor 26 and the flexible buffering portion 18. Preferably a mechanical assembly such as a cantilever may be used. By measuring the distance h and in knowledge of the geometrical properties of the flexible tube 8, the housing 2 and the recess 16, the volume of the cavity 10 can be determined. The distance h thus is an indicator of an amount of fluid inside the fluid cavity.

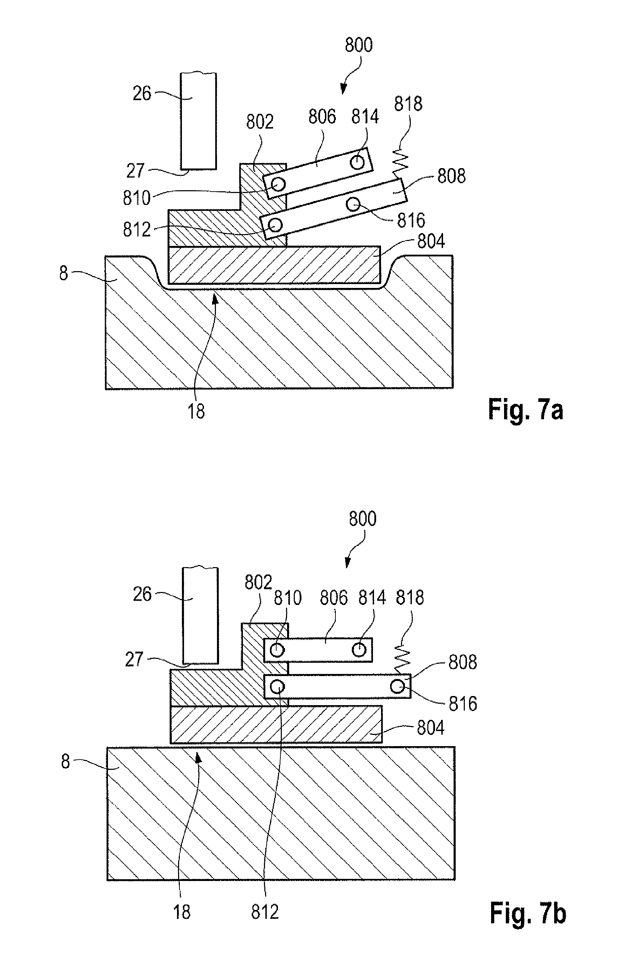

One preferred cantilevered mechanical assembly is shown in Fig. 7a and 7b. It will be described in more details below with reference to Fig. 7a and 7b.

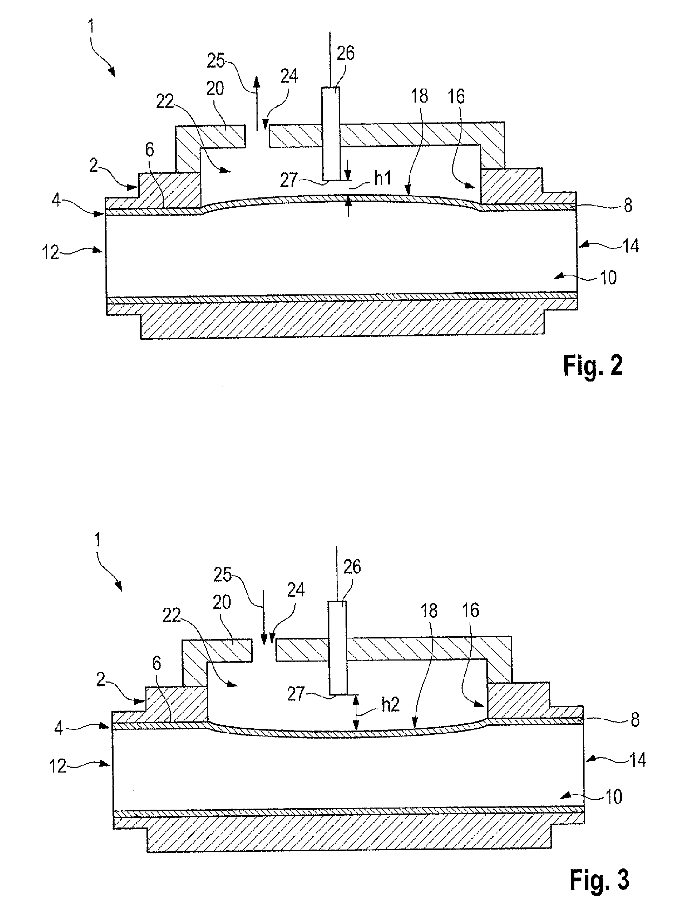

The working principle of the closed loop fluid buffer 1 is shown in greater detail in figure 2 and 3. Identical and similar elements are depicted with identical reference signs; where reference is made to the above description with respect to figure 1.

In figure 2 the fluid cavity volume of the fluid cavity 10 is increased by an increased amount of fluid inside the fluid cavity. Thus, the flexible buffering portion 18 is expanded or swollen into the recess 16 and having a substantially convex shape. To allow this, the pressure inlet 24 acts according to this state also as an outlet and gas can escape from the working chamber 22 as indicated by arrow 25. The distance h1 between the sensor 26 and the flexible buffering portion 18 is decreased indicating an increased volume and amount of fluid in the fluid cavity 10. From the distance h1 and the geometrical properties of working chamber 22, the fluid volume inside the fluid cavity 10 can be determined.

Contrary to this state with increased volume (figure 2), figure 3 shows a third state of the fluid buffer 1 with decreased fluid cavity volume inside the fluid cavity 10. This can be seen, since the flexible buffering portion 18 is drawn away from the sensor 26 and has a concave shape. The distance h2 between the sensor 26 and the flexible buffering portion 18 is increased. From the distance h2 and knowing the geometry of working chamber 22, the volume of the cavity 10 can be determined. Such a configuration with concave flexible buffering portion 18 can occur when a fluid flow out of the cavity 10 through the outlet 14 is higher than a fluid flow into the cavity 10 through the inlet 12.

The schematic drawings of the fluid buffer 1 show the movement of the flexible buffering portion 18 quite clearly. However in practice the movement (with respect to h1 and h2) preferably is in the range of h2 lower than 4mm, 3mm, 2,5mm, 2mm, 1,5mm in particular 1mm or 0,5mm.

In an alternative to the normal position of the flexible buffering portion shown in figure 1, the normal state or "zero position" may also be defined with a flexible buffering portion slightly moved away from the sensor 26, like is in principle shown in figure 3. It has been found that when defining the normal state or zero position like this, pressure variations at the output are reduced.

A bi-component mixing system 100 (see figure 4) for use with a dispenser 102 comprises a first pump 104 and a second pump 106. The first pump comprises an inlet 108 and an outlet 110. The second pump 106 comprises an inlet 112 and an outlet 114. The inlet 108 of the first pump 104 is connected via a line 116 to a first reservoir 118 of a first fluid. The inlet 112 of the second pump 106 is connected via a line 120 to a second reservoir 122 of a second fluid. The first and second reservoirs 118, 122 are according to this embodiment part of the bi-component mixing system 100 as also indicated by the system border 122 shown as a ghost line.

The system 100 further comprises a mixer 126, the mixer 126 comprising first and second inlets 128, 129 and one outlet 130. The first inlet 128 is connected via a line 132 to the outlet 110 of the first pump and the second inlet 129 of the mixer 126 is connected via a line 134 to the outlet 114 of the second pump 106.

According to the embodiment of figure 4, the bi-component mixing system 100 comprises a closed loop fluid buffer 136 having an inlet 138 and an outlet 140. The inlet 138 being connected via a line 142 to the outlet 130 of the mixer 126 and the outlet 140 of the closed loop buffer 136 being connected via a line 144 to a dispenser 102, which is according to this embodiment (figure 4) not part of the bi-component mixing system 100 as indicated by the system border 124. Preferably the closed loop fluid buffer 136 of the bi-component mixing system 100 according to figure 4 is formed as a closed loop fluid buffer 1 of the first embodiment according to figures 1 to 3. Thus the inlet 138 corresponds to the inlet 12 (figures 1 to 3) and the outlet 140 (figure 4) corresponds to the outlet 14 (figures 1 to 3). It should be understand that also different fluid buffers 136 may be used instead. The invention is not limited to this specific embodiment even though it is particular preferred.

The bi-component mixing system 100 additionally comprises a controller 146. The controller 146 is electrically connected to the pump 104, the pump 106, the mixer 126 and the closed loop fluid buffer 136, as indicated by the ghost lines 147, 148, 149, 150. Via the connection 150 the controller 146 is connected to a not shown sensor of the closed loop fluid buffer 146. The sensor of the closed loop fluid buffer 146 preferably is the sensor 26 according to figures 1 to 3. In alternative embodiments, the not shown sensor of the closed loop fluid buffer 136 may be formed as a sensor arrangement comprising two flow sensors, one first flow sensor being provided upstream of the closed loop fluid buffer 136 in the line 142 and a second flow sensor being arranged downstream of the closed loop fluid buffer 136 in the line 144. This is shown in figure 4b. The sensor, which provides a signal via the connection 150 to the controller 136 is adapted to provide a signal indicating an amount of fluid in the fluid buffer 136. Depending on the signal provided by the sensor, the controller 146 controls the first and second pumps 104, 106 and/or the mixer 126 so that when the signal provided by the sensor, via the connection 150 indicates that an amount of the fluid in the fluid buffer 136 is below a predetermined threshold, the pumps 104, 106 and/or the mixer 126 increase their fluid supply via lines 132, 134 and/or 142 and when the signal provided by the sensor via the connection 150 indicates than an amount of fluid in the fluid buffer 136 is above a predetermined threshold, the pumps 104, 106 and/or the mixer 126 decrease their fluid supply via the lines 132, 134 and/or 142. Therefore the shown bi-component mixing system 100 is formed as a flow request-triggered fluid supply system. Preferably when the signal provided by the sensor via the connection 150 indicates that an amount of fluid in the fluid buffer 136 is above a second predetermined upper threshold, which is higher than the first predetermined upper threshold, the controller 146 controls the pumps 104, 106 and/or the motor 600 of mixer 126 to stop the fluid supply. In the case where the mixer is a static mixer, as discussed above, the controller would only need to control the motors of the two pumps 104, 106 and not the motor 600 of the mixer 126.

According to the embodiment shown in figure 4, the closed loop fluid buffer 136 further is connected to a pressure regulator 152 via a pressure line 154. The pressure regulator 152 is adapted to supply a pressurized fluid, in particular gas, via the pressure line 154 to the closed loop fluid buffer 136. According to this embodiment (figure 4) the pressure regulator 152 is not part of the bi-component mixing system 100, as indicated by the system border 124. However in different applications and embodiments, the pressure regulator 142 may be part of the system 100 or integral with the closed loop fluid buffer 136. The controller 146 may be adapted to control the pressure regulator 152, or pressure regulator 152 may be controlled by other control elements in the larger system. The working principle of the pressure regulator is preferably as above described with reference to figures 2 and 3. Therefore, the closed loop fluid buffer 136 comprises a pressure inlet (not shown in figure 4) which preferably is formed corresponding to the pressure inlet 24 of the enclosed loop fluid buffer 1 according to figures 1 to 3.

Figure 4b shows the alternative embodiment of the bi-component mixing system 100 that is mentioned above. The system 100 in general is identical to the system 100 of figure 4. Therefore identical and similar elements are shown with identical reference signs. In contrast to the embodiment of figure 4, the bi-component mixing system of figure 4b comprises two flow sensors, or flow meters, 162, 164, instead of sensor 26 of figures 1-3. One flow sensor 162 is arranged upstream of the fluid buffer 136 and the second flow sensor 164 is arranged downstream of the fluid buffer 136. Both flow sensors 162, 164 are connected via connection lines 166, 168 to the controller 146. The signal from flow sensor 162 will indicate the flow rate of material into the fluid buffer 136, while the signal from flow sensor 164 will indicate their flow rate of material out of the fluid buffer 136. Therefore, the difference between the signals will provide an indication of the volume of material within the fluid buffer 136. If the difference between the signals indicates that there is too large of a volume of material within the buffer 136, then the controller 146 will slow down, or stop, the motors driving the pumps 104, 106 and the motor 600 driving the mixer 126. Conversely, if the difference between the signals indicates that there is too small of a volume of material within the buffer 136, then the controller 146 will speed up the motors driving the pumps 104, 106 and the motor driving the mixer 126.

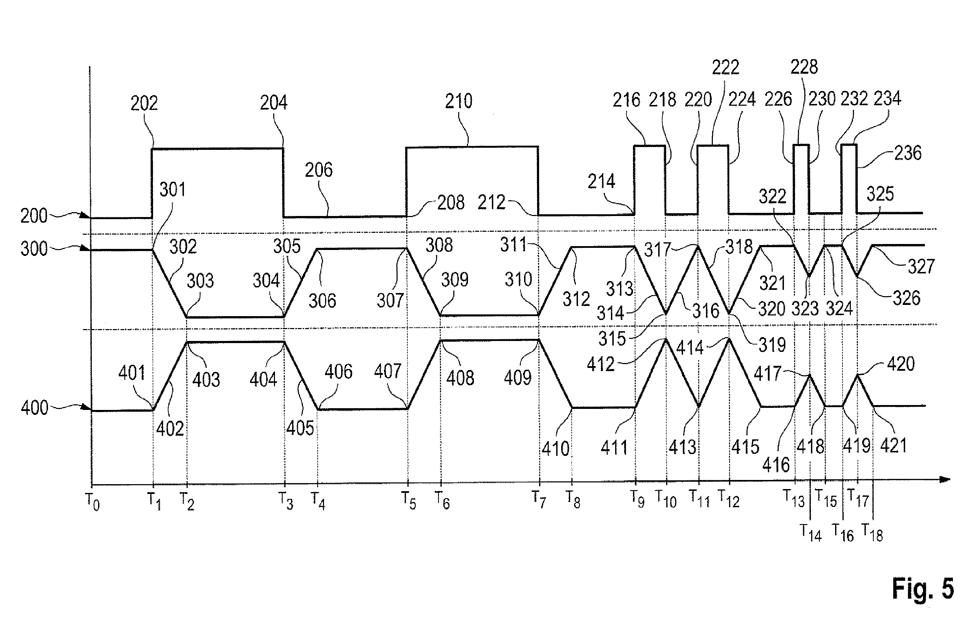

Figure 5 shows a schematic diagram, explaining the operation of the bi-component mixing system and the fluid buffer in greater detail in connection with the figure 4 embodiment of the invention. The horizontal axis is a time axis over exemplary working cycles of the bi-component mixing system. Graph 200 depicts closed (lower level) and open (upper level) states of the dispenser and thus indicates a flow request. Graph 300 depicts an amount of fluid inside the fluid buffer cavity wherein when graph 300 is in the upper level the fluid buffer is filled and when graph 300 is on the lower level the fluid buffer is empty. Graph 400 indicates a working speed and thus supplied fluid volume of the pumps. The lower level indicates lower working speed and the upper level indicates higher working speed.

At the time point T0 the dispenser is idle (see graph 200) the fluid buffer cavity is filled to a certain degree (cf. normal degree) (see graph 300) and the pumps are stopped (see graph 400). At a time T1 the dispenser opens 202 and thus fluid flows out of the dispenser. Therefore at 301 the amount of fluid in the fluid buffer decreases 302. At the same time when the level of fluid in the buffer cavity decreases 302 the sensor of the fluid buffer 1 (see figures 1 to 4) detects this and provides a signal to the controller (see figure 4) which adjusts the pumps. Note that it is understood that when the controller adjusts the pumps, the controller at the same time adjusts the motor driving the mixer, unless a static mixer is used, as explained above. The pumps thus at point T1 start to supply a fluid 401 and increasing the speed 402 until 403 at time point T2. At this point T2 the dispensed fluid flow 202 and the supplied fluid flow from the pumps 403 are in a balanced state so that the level inside the fluid buffer is constant 303. The output pressure of the fluid buffer is also kept constant during this operation.

At point T3 the dispenser is closed again 204 and in an idle state 206. Thus, since the pumps still supply fluid 404 in the fluid level of the fluid buffer start to rise 304 and increase 305 until it reaches a state 306. The increase 305 of the amount of fluid in the fluid buffer is again detected by the sensor and the pumps are controlled accordingly, thus decreasing 405 the working speed until again a balanced state at point T4 is reached; the fluid buffer is filled 306 and the pumps are stopped 406.

After a certain time at point T5 the dispenser again turns from idle 208 to open 210 and dispenses a fluid flow 210. Again the amount of fluid in the fluid buffer decreases 308 from normal 307 to a specific lower level 309 where in the same time the pumps increase their speed from 407 to 408. Until T7 the amount of fluid in the fluid buffer and the operation speed of the pumps are in the balanced state from 309 to 310 and 408 to 409. At time point T7 the dispenser again turns to idle 212 which again leads to an increase 311 of the amount of fluid in the fluid buffer and on the same time a decrease of the operation speed of the pumps until the pumps are stopped 410 at point T8. The level of fluid in the fluid buffer then is constant from 312 to 313.

At time points T9 and T11 two shorter dispensing cycles of the dispenser start. Thus at T9 and also T11 the dispenser is switched from idle 214, 220 to open 216, 222. At time point T9 thus the amount of fluid in the fluid buffer decreases 314 and on the same time the pumps start to operate and increase the operation speed until time point T10 when the pumps reach the full speed at 412. However, at the same time the dispenser is switched to idle 218 thus the amount of fluid immediately increases 316 again until it reaches point 317 which falls together with time point T11 at which the dispenser again is switched from idle 220 to open 222 thus the amount of fluid decreases 318 again and on the same time the pumps start to operate until 414 when also the dispenser is switched to idle. Subsequently the amount of fluid increases 320 to reach a normal level at 321 when the pumps are stopped 415.

The last two dispensing cycles are even shorter than the dispensing cycles at T9 and T11. At T13 the dispenser again turns from idle 226 to an open state 228. The amount of fluid in the fluid buffer subsequently used to decrease until point 323 (T14) when the dispenser is switched to idle 230 again. Since the time period between T13 and T14 is very short the level at 323 of fluid in the fluid buffer is in an intermediate point from the levels before. Even though the pumps start to speed up from 416 to 417 they do not reach their top speed. This shows that the pumps may be driven continuously and also may be driven at intermediate speeds. The pumps stop then again at point T15, 418 when the fluid amount inside the buffer is at the top level 324. This state is balanced until the dispenser turns from idle 232 to open 234 again when the amount of fluid in the fluid buffer decreases subsequently from 325 to 326 when at the same time the pumps start to supply fluid from 419 to 420 until the dispenser turns to idle 236 again and the fluid amount rises from 326 to 327 and the pumps are stopped from 420 to 421. At time T18 the system is again in a balanced state.

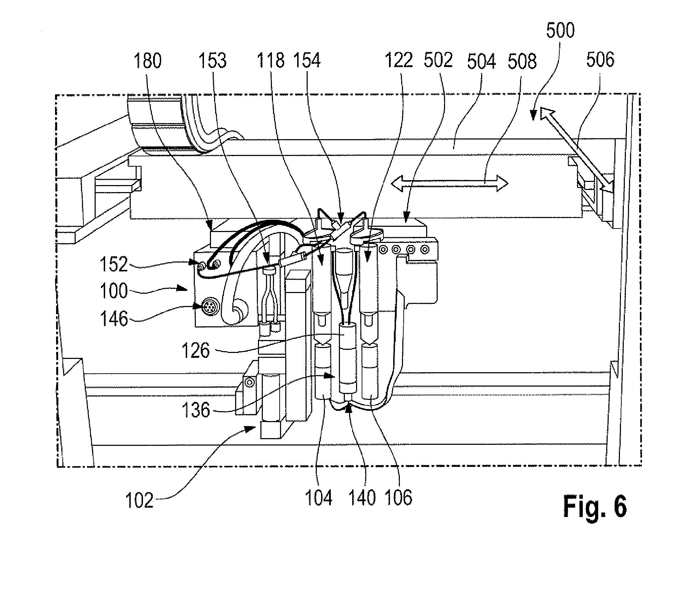

Figure 6 is the particularly important embodiment of the invention which shows a bi-component mixing system 100 mounted on an x-y-mover 500 with the dispenser, which is preferably a jetting valve. Identical and similar parts are indicated with identical reference signs. With respect to the mixing system 100, reference is also made to the above description of Figure 4.

The bi-component mixing system comprises to reservoirs 118, 122, which are both formed as syringes according to this embodiment. The reservoirs 118, 122 are connected to two pumps 104, 106, which are connected to a mixer 126. The mixer 126 is connected to a fluid buffer 136. The fluid buffer 136 is formed as a closed loop fluid buffer as above described with reference to figures 1 to 3. The fluid buffer 136 comprises a fluid buffer outlet 140, which is connected to a dispenser 102. In this embodiment, the dispenser is a DJ 9500 jetting valve that is obtainable from Nordson Asymtek of Carlsbad California, USA. Further the bi-component mixing system 100 comprises a controller 146 and a pressure regulator 152. The controller is connected to the fluid buffer 136, the pumps 104, 106 and the dispenser 102. The pressure regulator 152 further is connected via a line 153 to the syringes 118, 122 and a line 154 which branches from the line 153 to the fluid buffer 136.

In one preferred embodiment, the whole bi-component mixing system 100 is mounted via a mounting means 180, which according to this embodiment is formed as a metal retainer, to the x-y-mover 500 for movement with the jetting valve 102. More specifically the bi-component mixing system 100 is mounted to a hoist 502, which is movably mounted on a gantry 504 of the x-y-mover 500. The gantry 504 is movable into an x-direction indicated by the arrow 506. The hoist is movable into a y-direction indicated by arrow 508 relative to the gantry 504. Thus the whole bi-component mixing system 100 is movable as a single unit by means of the x-y-mover 500 into an x- and y-direction.

In another preferred embodiment, only the mixer 126 and fluid buffer 136 of the bi-component mixing system 100 are mounted on the X-Y mover 500 for movement with the jetting valve 102, and some or all of the remaining components of the bi-component mixing system 100 could be fixed in position. For example, the syringes (or other material supplies) as well as the pumps connected to the syringes, could be fixed in position with fluid lines connecting them to the mixer which is moving with the jetting valve. Likewise, the controller could be fixed in position and connected by electrical conductors to the sensor (or flow meters) of the fluid buffer, with the fluid buffer moving with the jetting valve.

Figures 7a and 7b show in more detail a preferred embodiment of the sensor 26 used in the closed loop fluid buffer 1, 136 of the present invention. According to figure 7a the flexible buffering portion 18 of the tube 8 is in a slightly dented position which may be defined as the zero position wherein the buffer is at a normal filled stage. In figure 7b in contrast the flexible buffering portion 18 is at the same level as the rest of the tube. Thus the tube has a substantial cylindrical shape and the buffer is in a filled state.

For measuring the volume of the buffer the sensor 26 is arranged as already described above with reference to figures 1 to 3. According to one preferred embodiment (figures 7a, 7b) the sensor 26 is an inductive distance measuring sensor. Such sensors are available, for example, from Baumer Electric, Frauenfeld, Switzerland.

According to this specific and preferred embodiment the sensor 26 cooperates with a cantilever arrangement 800 which helps the sensor 26 to measure the movement of the flexible buffering portion 18. The cantilever arrangement 800 in general comprises a ferromagnetic part 802 and a contactor 804. Both parts 802, 804 are fixed together. The contactor 804 is in permanent contact with the flexible buffering portion 18 and is moved up and down when the buffer is being filled or emptied. The ferromagnetic part 802 moves in accordance with the contactor and thus travels forth and back in the direction of the sensing portion 27 of the sensor 26. As may be seen from comparing figure 7a and 7b the distance between the sensing portion 27 and the ferromagnetic part 802 is much smaller when the buffer is filled as shown in figure 7b. To ensure a defined movement along a defined path of the ferromagnetic part 802 and the contactor 804 two cantilevers 806, 808 are provided. The cantilevers 806, 808 are arranged in parallel with respect to each other for a rhomboid motion. Each cantilever 806, 808 is fixed at a first pivoting point 810, 812 to the ferromagnetic part 802. In an alternative embodiment the first pivoting points 810, 812 can also be arranged on the connector 804 or on a separate element. On the opposite end thereof, the cantilevers 806, 808 are fixed at second pivoting points 814, 816 to the housing (2, not shown) of the fluid buffer 1, 136. The ferromagnetic part 802 and the connector 804 are adapted to travel together as one unit substantially perpendicular to the central axis of the tube 8 and substantially coaxially to the central axis of the sensor 26. Additionally a biasing member 818 which according to this embodiment is formed as a spiral spring, is provided at the second cantilever 808. The biasing member 818 is provided for biasing the cantilever arrangement 800 in the direction of the sensor 26 to act against gravitational forces acting on the cantilever 800. Therefore, the cantilever arrangement 800 is substantially neutral to the pressure inside the tube 8.

The functioning principle of the sensor 26 and the cantilever arrangement 800 can be described as follows: As volume of the tube 8 increases, the ferromagnetic part 802 and the contactor 804 are pivoted upwardly and moved closer to the sensor 26. As the ferromagnetic part 802 moves towards and away from the sensor 26, the sensor 26 produces a signal that indicates the distance of the ferromagnetic part 802 and thus the contactor 804 from the sensor 26, and thereby, the expansion of the fluid buffer 1, 136.

## Claims

**1.** A closed loop fluid buffer (1, 136) for stabilizing an output pressure of a fluid supply system, in particular a bi-component mixing system (100), comprising a fluid cavity (10) having a fluid cavity volume and a fluid cavity wall,
said fluid cavity (10) having an inlet (12, 138) and an outlet (14, 140), wherein said inlet (12, 138) is adapted to be in fluid communication with at least one fluid reservoir (118, 122) and said outlet (14, 140) is adapted to be in fluid communication with a dispensing applicator (102),
wherein said fluid cavity wall comprises at least one flexible buffering portion (18) to allow a volume change of the fluid cavity volume.

**2.** The closed loop fluid buffer according to claim 1, further comprising a rigid housing (2), said housing partially forming said fluid cavity wall, wherein said housing (2) comprises a recess (16) which cooperates with said flexible buffering portion (18) such that said flexible buffering portion (18) can expand into said recess (16) in order to provide said volume change of the fluid cavity volume.

**3.** The closed loop fluid buffer according to claim 1 or 2, wherein said recess (16) is sealed from said fluid cavity (10) by means of said flexible buffering portion (18), so that said recess (16) and said flexible buffering portion (18) defining a working chamber (22) inside the housing (2).

**4.** The closed loop fluid buffer according to one of the preceding claims, wherein
said flexible buffering portion (18) is formed by a flexible membrane, said membrane being fixedly attached to said housing (2) and covering said recess (16).

**5.** The closed loop fluid buffer according to one of the preceding claims, wherein
said flexible buffering portion (18) is formed by a flexible tube (8) arranged in said housing (2) and forming at least partially said fluid cavity wall.

**6.** The closed loop fluid buffer according to one of the preceding claims, wherein said housing (2) comprises a pressure inlet (24) for supplying a pressurized fluid, in particular gas, into said working chamber (22)

**7.** The closed loop fluid buffer according to one of the claims 2 to 6, wherein said housing (2) is at least partially transparent.

**8.** The closed loop fluid buffer according to one of the preceding claims, further comprising a sensor (26) for detecting a volume change of said fluid cavity volume.

**9.** The closed loop fluid buffer according to claim 8, wherein said sensor (26) is arranged within said working chamber (22).

**10.** The closed loop fluid buffer according to claim 9, wherein said sensor (26) is adapted to measure a distance (h, h1, h2) to said flexible buffering portion (18).

**11.** The closed loop fluid buffer according to claim 8 or 9, wherein said sensor comprises at least one flow sensor (162, 164) or flow meter arranged at the inlet and/or the outlet of said fluid buffer cavity.

**12.** A bi-component mixing system (100) for use with a dispenser (102), comprising
a first pump (104) for pumping a first component, said first pump (104) having an inlet (108) and an outlet (110), the inlet (108) being in fluid communication with a reservoir (118) of the first component;
a second pump (106) for pumping a second component, said second pump (106) having an inlet (112) and an outlet (114), the inlet (112) being in fluid communication with a reservoir (122) of the second component;
said outlets (110, 114) of said first and second pumps (104, 106) each being in fluid communication with a mixer (126) for mixing said first and second components,
and a closed loop fluid buffer (1, 136) in fluid communication with said mixer (126), wherein said closed loop fluid buffer (1, 136) is a fluid buffer (1, 136) according to one of the preceding claims.

**13.** The bi-component mixing system according to claim 12,
wherein the sensor (26) provides a signal indicating a volume change of the cavity volume of the fluid buffer (1, 136); and comprising
a controller (146) receiving the signal provided by said sensor (26) and adapted to control said first and second pumps (104, 106) and/or said mixer (126) based on said signal.

**14.** The bi-component mixing system according to claim 13, wherein said closed loop fluid buffer (1, 136) and said controller (146) are adapted to define a flow request-triggered fluid supply.

**15.** The bi-component mixing system according to claim 13 or 14,
wherein the controller (146) is adapted to control said first and second pumps (104, 106) and/or said mixer (126) so that,
- when said signal provided by said sensor (26) indicates that the amount of fluid in the fluid cavity (10) is below a predetermined lower threshold, the fluid flow from said mixer (126) to said fluid buffer (1, 136) is increased; and
- when said signal provided by said sensor (26) indicates that the amount of fluid in the fluid cavity (10) is above a predetermined upper threshold, the fluid flow from said mixer (126) to said fluid buffer (1, 136) is decreased.

**16.** The bi-component mixing system according to one of the claim 12 to 15, wherein said fluid buffer (1, 136) is connectable or connected to a pressure regulator (152) for supplying pressurized gas to the fluid buffer (1, 136), in particular to the working chamber (22).

**17.** The bi-component mixing system according to one of the claim 17, wherein the pressure regulator (152) is connected to the reservoir (118) of the first component and/or the reservoir (122) of the second component.

**18.** The bi-component mixing system according to one of the claim 16 or 17, wherein said controller (146) is adapted to control said pressure regulator (152).

**19.** The bi-component mixing system according to one of the claim 12 to 18, wherein the dispenser (102) comprises a jetting valve.

**20.** Dispensing system, comprising
an x-y-mover (500);
a dispenser (102) mounted on said x-y-mover (500); and
a bi-component mixing system (100) according to one of the claims 12 to 18, wherein at least some of the components of said bi-component mixing system are mounted on said x-y-mover (500) and connected to said dispenser (102) so that said dispenser (102) and said components of said bi-component mixing system (100) which are mounted on the x-y-mover (500) are movable together as a unit by means of said x-y-mover (500).

**21.** The dispensing system of claim 20, wherein the components of said bi-component mixing system (100) which are mounted on said x-y mover (500) are said mixer (126) and said fluid buffer (136).

**22.** The dispensing system of claim 20 or 21, wherein other components of said bi-component mixing system (100), including one or more reservoirs (118, 122), in particular syringes, one more pumps (104, 106) and/or a controller (146), are mounted on said x-y mover (500).

**24.** Method for dispensing a fluid, in particular a bi-component fluid, comprising:
- dispensing a specific amount of fluid from a dispenser;
- detecting a change of a fluid amount in a fluid buffer;
- providing a signal indicating said change of the fluid amount in the fluid buffer to a controller;
- controlling at least one pump and/or a fluid mixer based on said signal.

**25.** Method according to claim 24, wherein controlling comprises:
- controlling said at least one pump and/or said fluid mixer to supply an increased fluid flow when said signal indicates a decrease of the fluid amount in the fluid buffer; and
- controlling said at least one pump and/or said fluid mixer to supply a decreased fluid flow when said signal indicates an increase of the fluid amount in the fluid buffer.
